(19) Europäisches Patentamt
European Patent Office
Office européen des brevets

(11) Publication number: 0 350 728 A2

(12) EUROPEAN PATENT APPLICATION

(21) Application number: 89111931.5

(22) Date of filing: 30.06.89

(51) Int. Cl.4: C04B 35/00, C25B 11/04, H01S 3/03

(30) Priority: 15.07.88 US 219679
15.07.88 US 220143

(43) Date of publication of application:
17.01.90 Bulletin 90/03

(84) Designated Contracting States:
AT BE CH DE ES FR GB GR IT LI LU NL SE

(71) Applicant: W.R. Grace & Co.-Conn. (a Connecticut corp.)
Grace Plaza 1114 Avenue of the Americas
New York New York 10036(US)

(72) Inventor: Spencer, Nicholas David
5311 42nd St., N.W.
Washington, DC 20015(US)
Inventor: Dolhert, Leonard Edward
13324 Elliott Drive
Clarksville, MD 21029(US)

(74) Representative: Abitz, Walter, Dr.-Ing. et al
Abitz, Morf, Gritschneder, Freiherr von Wittgenstein Postfach 86 01 09
D-8000 München 86(DE)

(54) **Shaped mixed oxide products.**

(57) An extremely pure powder of an oxide of two or more metals, homogeneous at the atomic level, is shaped and compressed (for example, compacted by cold isostatic pressing) to provide greenware which is sintered to provide finished ceramic articles such as laser cathodes and electrodes for chlorine/caustic electrolysis. For example, pure mixed oxide powder consisting of $La_{0.7}Sr_{0.3}CoO_3$ is shaped to a tube, which is cold-isostatically pressed at 20,000 psi, then sintered to provide a cathode for a $CO_2$ laser. The starting oxides can be prepared by (1) reacting in water, soluble salts of two or more metals with quaternary ammonium carbonate; the metals being those that form water-insoluble carbonates, thereby to precipitate mixed carbonates of the metals; (2) recovering and drying the precipitate; and (3) calcining the precipitate to provide mixed metal oxides homogeneous at the atomic level and substantially free from extraneous contaminants.

EP 0 350 728 A2

# SHAPED MIXED OXIDE PRODUCTS

## Field of the Invention

This invention is related to the production of ceramics, and more particularly to the preparation of mixed metal oxides, shaped by cold isostatic pressing, and sintered to provide a finished ceramic mixed metal oxide.

## Summary of the Invention

An extremely pure powdered metal oxide mixture, homogeneous at the atomic level, is prepared by reacting quaternary ammonium carbonate with ions of at least two metals that form water-insoluble carbonates, and recovering and calcining the resulting precipitate. The resulting precipitate is pressed into shaped greenware by cold isostatic pressing, and sintered to provide selected finished ceramic products, e.g., laser cathodes, electrodes for chlorine/caustic electrolysis, etc. For example, pure mixed oxide powder consisting of $La_{0.7}Sr_{0.3}CoO_3$ is shaped to a tube, which is cold-isostatically pressed at 20,000 p.s.i., then sintered to provide a cathode for a $CO_2$ laser.

## References

Oxides of La.Sr.Co are not novel as cathodes for $CO_2$ lasers. See N. Karube et al., "Sealed-off $CO_2$ Lasers With $La_{1-x}Sr_xCo_3$ Oxide Cathodes," Appl. Phys. Lett., 43, 1086 (1983); and N. Iehisa et al., "Performance Characteristics of Sealed-off $CO_2$ Laser with $La_{1-x}Sr_xCoO_3$ Oxide Cathodes," J. App. Phys., 59, 317 (1986). However, the herein described method of preparing such materials is believed novel.

## Detailed Description of the Invention

### Solution A, the Carbonate Reagent

A solution of quaternary ammonium carbonate is conveniently prepared by bubbling $CO_2$ through an aqueous solution of a quaternary ammonium hydroxide until the quaternary carbonate is stoichiometrically formed and $CO_2$ is dissolved in excess. The quaternary ammonium hydroxide has the formula:

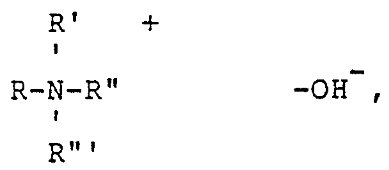

where R, R′, R″, and R‴ are the same or different members of the group

i) alkyl, e.g., tetramethylammonium hydroxide, tetraethylammonium hydroxide, tetrapropylammonium hydroxide, dimethyldiethylammonium hydroxide, cyclopropyltrimethylammonium hydroxide and the like;

ii) aromatic, e.g., phenyltrimethylammonium hydroxide, phenylethyldimethylammonium hydroxide, benzyltrimethylammonium hydroxide, and the like;

iii) heterocyclic;

iv) and any two group members may be joined in a ring whereby N becomes a ring member, e.g., dimethyl pyrrolidinium hydroxide, dimethylpyridinium hydroxide, and the like.

### The Metals

The invention process is a general one and is applicable to any metals (a) that provide water-soluble salts (nitrates, acetates, etc.) and (b) which form water-insoluble carbonates. The carbonates in various instances are actually the basic carbonates, subcarbonates, etc. It makes no difference, the important thing being water-insolubility. Here again it should be borne in mind that all carbonates are to some extent water-soluble. Those that are difficultly soluble are intended for use in this invention, e.g., those having solubilities roughly comparable to the carbonates of the alkaline earth metals.

Some of the preferred metals (that have insoluble carbonates, as the term is used herein) are:

(1) The rare earths, i.e., elements with atomic numbers 57-71 inclusive.

(2) Alkaline earth metals (Be, Mg, Ca, Sr, Ba).

(3) Cu, Ag, Au.

(4) Mn, Fe, Co, Ni.

(5) Zn, Cd, Hg.

(6) Pb, Bi.

(7) Sc,. Y.

(8) Zr.

## Solution B, the Metal Salts

An aqueous solution of metal salts is made up by dissolving their nitrates or other water-soluble salts in water. The metal atomic ratios will depend on the end use intended. Typically, any given metal may be present in an atomic ratio of 1-100, suitably 1-10, with respect to any other metal. However, when it is desired to introduce very small amounts of a given metal, this ratio will vary accordingly.

## The Co-carbonate Slurry

Solutions A and B are now added slowly, simultaneously, at constant rates, with stirring, to a pool ("heel") of deionized water. This pool is the reaction medium for the carbonate co-precipitation reaction, and the eventual result is a carbonate slurry. Solutions A and B and the heel are suitably each about the same starting volume. The pH of the reaction mass is suitably maintained at about 7.7-10.0 by drip-wise addition of a quaternary ammonium hydroxide. The precipitated carbonates can be recovered from the slurry using various techniques. On a laboratory scale simple filtration followed by air drying the precipitate is adequate for good homogeneity.

The co-carbonate slurry comprises:

i) precipitated carbonates, about 0.5-75 wt. %;

ii) quaternary ammonium cations, about 0.1-75 wt. %;

iii) anions residual from the starting metal salts, stoichiometrically equivalent to the metal carbonates; and

iv) balance, water.

This novel carbonate-containing slurry is per se an essential part of the invention.

## Example 1

116.20 g $La(NO_3)_3.5 H_2O$

25.50 g $Sr(NO_3)_2$

116.40 g $Co(NO_3)_2.6 H_2O$

The above nitrates were placed in a 1-L beaker. Deionized water was added to make a 800-ml solution. 800 ml, pH 10.00 tetramethylammonium carbonate, produced by bubbling $CO_2$ into 25 wt. % aqueous tetramethylammonium hydroxide, was placed in a separate 1-L beaker. An 800 ml deionized water

"heel" was placed in a 4-L beaker. pH of the 3-metal nitrate solution was 3.90. Simultaneously, the nitrate solution and the tetramethylammonium carbonate solution are dripped into the heel, keeping the heel pH at about 9 using neat tetramethylammonium hydroxide, which is dripped separately into the heel from a 500 ml burette. About 30 minutes was required to add the two reactant solutions to the heel. An extra 335 mls neat tetramethylammonium hydroxide were added to keep the pH at 9.01. The solution was allowed to "age" by stirring for 20 minutes, to aid subsequent filtration. The resulting purple solution was filtered through double-thickness filter paper with a Buechner funnel. Filtration proceeded overnight. The semi-dry cake was placed in a glass tray, which was placed in a 100 °C convection oven where it was allowed to dry. Weight of purple cake, 185.02 g. The cake pieces were broken up with mortar and pestle. 46.00 g of the resulting powder was placed in a platinum crucible and calcined in air, as follows: 8 hours to 900 °C; 8 hours at 900 °C; then power off, and allowed to cool to room temperature. The resulting powder was determined by x-ray diffraction to be homogeneous at the atomic level and phase pure.

## Extraneous Materials

Prior art processes conventionally enhance homogeneity by grinding the calcined mixed oxides, followed by recalcining. In some instances this sequence may be repeated several times. The problem here is that effective grinding inevitably and inherently introduces trace impurities into the ceramic, simply by impacting the ceramic between the balls and walls (or other grinding surfaces) of the grinding mill. It is known, for example, that silica or stainless steel balls in a ball mill lose significant mass over a period of use. This mass of course disappears into whatever is being milled. Mills that comminute by particle self-impact lose metal by wall-scouring, particularly in the area of steam entry.

Thus, the firing-grinding-refiring technique rapidly achieves a balance: improvement in homogeneity tends to be matched by contamination build-up that cancels part or all of the improvement.

The process of this invention, by achieving ultimate homogeneity in the first place, avoids the grinding problem altogether. The oxide product can, of course, be subjected to the conventional firing-grinding-refiring cycle, but this is not preferred. The process works best when no extraneous materials are introduced into the material at any stage. By "extraneous materials" is meant materials introduced into the base metal solution to precipitate the carbonates, e.g., potassium carbonate to precipitate La, Sr, and Co carbonates. The term also includes contaminants (generally metals or metal oxides) introduced into the composition by grinding mixed oxides. If the product is ground in a ball mill using quartz or silica balls, some of the impurity is silica.

The extreme purity and homogeneity of the mixed oxide powders of the invention qualify the powders for specialty uses. Particularly useful products can be prepared by compressing the powders into greenware ceramic shapes, suitably followed by sintering. Such compression may be extrusion, compression in a pellet mold, etc. Where extreme pressures are desired, uniformly applied (especially for intricate shapes), cold isostatic pressing ("c-i-p") is eminently useful. This technique is well known.

## Laser Cathode

A low-resistance cathode tube for a $CO_2$ laser was prepared by placing 40 g of the calcined powder from Example 1 into a rubber mold, which was then cold-isostatically pressed at 20,000 psi. In determining dimensions of the mold, the final dimensions desired, as affected by shrinking in the c-i-p and subsequent sintering operations, had to be taken into account. The greenware shrinks about 15% linearly during c-i-p and another 22% (approximate) during sintering. Overall shrinkage in this particular instance is thus about (1-0.15) x (1-0.22) = 0.66, so mold dimensions are suitably 1/0.66 x final compacted and sintered dimensions, i.e., about 1.5 x. This factor may vary somewhat depending on compaction pressure, sintering schedule, powder composition, etc. In this case the final dimensions of the cathode tube were about 1" thick. Following c-i-p, the greenware was placed on a support bed of alumina grit in an alumina boat, which was placed in a furnace, and the greenware was sintered in air per the following schedule (all °C): 3 hours from room temperature to 1050°; 6 hours at 1050°; 1/2 hour to 1150°; then 6 hours at 1150°; then 1/2 hour to 575°, then power off and allow to cool to room temperature.

**Claims**

1. Method comprising shaping into a greenware shape, a mixed metal oxide composition, the metals being those that form water-insoluble carbonates, said composition characterized in that the oxide composition is homogeneous at the atomic level and is free from extraneous materials; and sintering the greenware to form a finished ceramic product homogeneous at the atomic level and free from extraneous materials.

2. Method according to Claim 1 wherein the composition of the greenware shape contains at least one oxide of a metal of the group: the rare earths; the alkaline earths; Cu, Ag, and Au; Mn, Fe, Co, and Ni; Zn, Cd, and Hg; Pb and Bi; and Sc, Y, and Zr.

3. Method according to Claim 1 wherein the greenware shape is subjected to cold isostatic pressure of at least about 10,000 psi to compact the mixed metal oxide composition.

4. Method according to Claim 1 wherein the mixed metal oxide is prepared by reacting an aqueous quaternary ammonium carbonate with ions of at least two metals that form water-insoluble carbonates, followed by recovering and calcining the carbonate precipitate.

5. Method according to Claim 1 wherein the greenware shape is subjected to cold isostatic pressure of about 20,000 psi, and sintering is 3 hours from room temperature to 1050° C, 6 hours at 1050° C, 1/2 hour to 1150° C, 6 hours at 1150° C 1/2 hour to 575° C, then allow to cool to room temperature.

6. Method according to Claim 2 wherein the metals are La, Sr, and Co in the respective atomic ratio 0.7:0.3:1.

7. Method according to Claim 1 wherein the finished ceramic product is a chlorine/caustic electrolysis electrode.

8. Greenware shape comprising compressed particles of a mixed metal oxide from at least two metals which form water-insoluble carbonates homogeneous at the atomic level and free from extraneous materials.

9. Greenware according to Claim 8 wherein the composition of the greenware shape contains at least one oxide of a metal of the group: the rare earths; the alkaline earths; Cu, Ag, and Au; Mn, Fe, Co, and Ni; Zn, Cd, and Hg; Pb and Bi; and Sc, Y, and Zr.

10. Greenware according to Claim 9 consisting of an oxide of La, Sr, and Co in a ratio so as to provide $La_{0.7}Sr_{0.3}CoO_3$.

11. Mixed oxide composition, being the sintered shaped greenware of Claims 8, 9, or 10.

12. Composition according to Claim 11, wherein the shape is a laser cathode.

13. Composition according to Claim 11, wherein the shape is a chlorine/caustic electrode.